# EUROPÄISCHE PATENTSCHRIFT

(11) **EP 0 338 219 B1**
(45) Veröffentlichungstag und Bekanntmachung des Hinweises auf die Patenterteilung: **02.06.1993**
(21) Anmeldenummer: 89103436.5
(22) Anmeldetag: 28.02.1989
(51) Int. Cl.: F16H 9/18, F16H 47/06

(54) **Getriebeaggregat für Kraftfahrzeuge**
Transmission unit for motor vehicles
Transmission pour véhicule automobile

(30) Priorität: 22.04.1988 DE 3813516
(43) Veröffentlichungstag der Anmeldung: 25.10.1989
(73) Patentinhaber: Bayerische Motoren Werke Aktiengesellschaft, 80788 München (DE)
(72) Erfinder: Weigand, Norbert, D-8000 München 50 (DE)

(56) Entgegenhaltungen:
- EP-A- 168 569
- US-A- 3 503 279
- US-A- 4 644 821
- Tagungsband 1. Aachener Kolloquium Fahrzeug- u. Motorentechnik, 1987, S. 487-522

## Beschreibung

Die Erfindung bezieht sich auf ein Getriebeaggregat für Kraftfahrzeuge nach dem Oberbegriff des Hauptanspruchs.

Aus der EP-A 168 569 ist ein gattungsgemäßes Getriebeaggregat für Kraftfahrzeuge bekannt. Darin wird ein Getriebeaggregat beschrieben, das für den Wechsel der Fahrtrichtung ein Planetengetriebe mit einer Vorwärtsgang- und einer Rückwärtsgangkupplung besitzt. Durch diese zwei Kupplungen wird der Bauraum und das Gewicht des Getriebeaggregates vergrößert.

Der Aufsatz "Kettenwandlergetriebe der VW-Forschung", Tagungsband 1. Aachener Kolloquium Fahrzeug- und Motorentechnik, 1987, Seite 487 bis 522, beschreibt ein Wendegetriebe, das aus einem einfachen Planetenradsatz besteht. Für Rückwärtsfahrt wird der Planetenträger über eine Klauenkupplung an das Gehäuse gelegt und am Ringrad abgetrieben, für Vorwärtsfahrt ist der Planetensatz durch eine Schaltverzahnung überbrückt.

Aufgabe der Erfindung ist es, ein gattungsgemäßes Getriebeaggregat mit vergleichsweise hierzu verringertem Bauraum und Gewicht zu entwickeln.

Die Aufgabe wird erfindungsgemäß mit dem Kennzeichen des Hauptanspruchs gelöst. Vorteilhafte Ausgestaltungen der Erfindung ergeben sich aus den Unteransprüchen.

Bei erfindungsgemäßem Verwenden einer einzigen Kupplung für das Planetengetriebe zum Wechsel von Vorwärts- in Rückwärtsfahrt und umgekehrt, entfällt der Nachteil zweier Kupplungen, deren öffnungs- und Schließvorgänge notwendigerweise aufeinander abgestimmt werden müssen. Die Reibelemente der erfindungsgemäßen Kupplung verbinden dazu für Vorwärtsfahrt zwei Elemente des Planetenradsatzes und für Rückwärtsfahrt wird über hydraulische Druckbetätigung ein Element des Planetenradsatzes am Getriebegehäuse festgelegt.

Der erwähnte Fahrtrichtungswechsel wird nach der Erfindung in einfacher Weise dadurch erzielt, daß für die Vorwärtsfahrt das über die Kupplung gesperrte Planetengetriebe als Block umläuft, und die Kupplung in ihrer zweiten Schaltposition den Steg eines einzig vorhandenen Satzes Planetenräder am Getriebegehäuse festhält.

Eine sehr kompakte, kurze Bauweise des Getriebeaggregates mit einer Anfahrkupplung und einem Drehmomentsensor ergibt sich, wenn der Drehmomentsensor platzsparend innerhalb der Anfahrkupplung angeordnet ist.

Eine bevorzugte Ausführungsform der Erfindung sieht eine abtriebsseitige Zuordnung des Plantengetriebes zu einem Umschlingungsgetriebe vor. Durch die abtriebsseitige Zuordnung liegt am Umschlingungsgetriebe in der am größten übersetzten Rückwärtsgangstufe kein erhöhtes Antriebsmoment an. Zum Beispiel läßt sich dadurch bei einer hydraulischen Ansteuerung eines stufenlos verstellbaren Umschlingungsgetriebes der hierzu erforderliche hydraulische Druck in vorteilhafter Weise gering halten.

Bei dem Umschlingungsgetriebe soll es sich um ein über ein endloses Treibmittel kraft- oder formschlüssiges Getriebeelement mit parallelem Achsversatz von An- und Abtrieb handeln.

Ein bevorzugtes Ausführungsbeispiel der Erfindung ist in der nachfolgenden Beschreibung und der zugehörigen Zeichnung näher dargestellt. Es zeigen:
- Figur 1a: einen Längsschnitt durch ein Getriebeaggregat, schematisiert dargestellt,
- Figur 1b: die Ansicht II-II aus Figur 1a,
- Figur 2: in vergrößertem Maßstab die Schnitthälfte einer Anfahrkupplung und eines Drehmomentsensors innerhalb des Getriebeaggregates aus Figuren 1a und 1b.

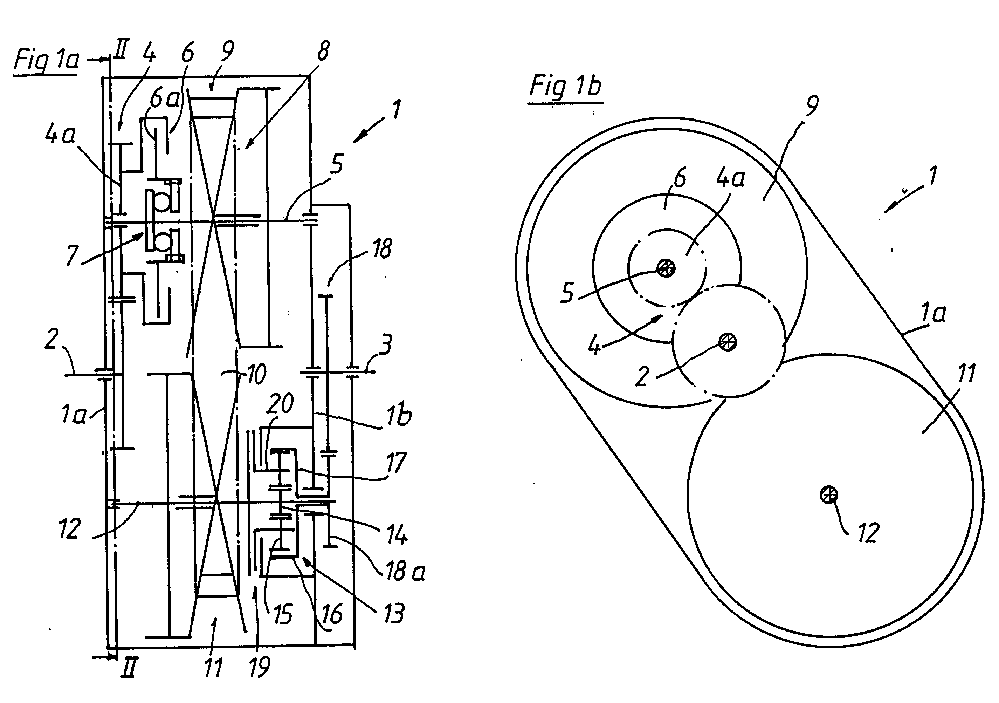

Figuren 1a und 1b zeigen ein Getriebeaggregat 1 mit einer motorseitig zugeordneten Antriebswelle 2 und einer hierzu gleichachsig angeordneten Abtriebswelle 3. Diese ist über nicht dargestellte Antriebsmittel mit einem Achsgetriebe verbunden, das zu zwei Fahrzeugrädern führt.

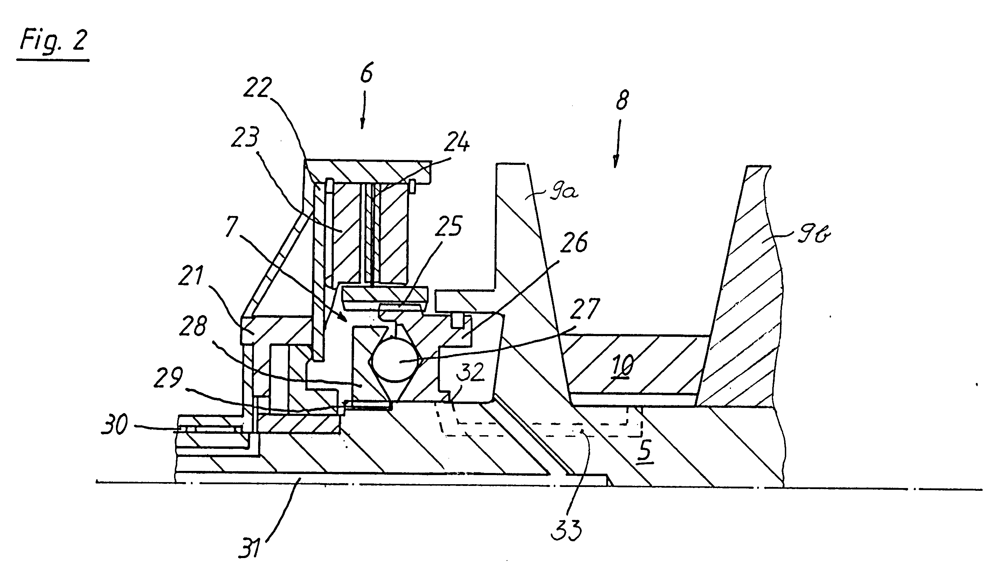

Die Antriebswelle 2 ist in einem Getriebegehäuse 1a des Getriebeaggregats 1 gelagert und über einen Radsatz 4 achsversetzt verbunden mit einer Anfahrkupplung 6, deren Aufbau und Wirkungsweise als bekannt vorausgesetzt wird. Eine Mitnehmerscheibe 6a der Anfahrkupplung 6 besitzt radial innenliegend einen Drehmomentsensor 7, dessen Aufbau aus Figur 2 zu entnehmen ist. Der Drehmomentsensor 7 stellt die Antriebsverbindung her zu einer Primärwelle 5, die beidseitig im Getriebegehäuse 1a gelagert ist. Auf dem linken Ende der Primärwelle 5 ist die Lagerung für ein achsparallel zur Antriebswelle 2 angeordnetes Rad 4a des Radsatzes 4 vorgesehen.

Das über den Drehmomentsensor 7 übertragene Antriebsmoment gelangt über die Primärwelle 5 an ein stufenlos regelbares Umschlingungsgetriebe 8. Ein Antriebsscheibensatz 9 des Umschlingungsgetriebes 8 ist über einen endlosen Riemen 10, ausgeführt als Gliederkette, mit einem Abtriebsscheibensatz 11 treibend verbunden.

Der Abtriebsscheibensatz 11 steht unmittelbar in Antriebsverbindung mit einer Sekundärwelle 12. Diese ist parallel zur Primärwelle 5 ausgerichtet und befindet sich unterhalb der Antriebswelle 2 bzw. Abtriebswelle 3. Die Lagerung der Sekundärwelle 12 erfolgt einerseits im Getriebegehäuse 1a und andererseits innerhalb eines Planetengetriebes 13, das abtriebsseitig zum Abtriebsscheibensatz 11 auf der Sekundärwelle 12 angeordnet ist.

Das Planetengetriebe 13 besitzt ein mit der Sekundärwelle 12 fest verbundenes Sonnenrad 14, einen Satz Planetenräder 15 und ein Hohlrad 16. Dieses ist über einen radial nach innen gerichteten Flansch 17 in einem Gehäuseteil 1b des Getriebegehäuses 1a gelagert. Der Flansch 17 ist antriebsverbunden mit einem Rad 18a eines Radsatzes 18 zum Ausgleich des Achsversatzes gegenüber der Abtriebswelle 3.

Wie aus Figur 1b ersichtlich ist, ergibt sich durch die zusammengerückte, jedoch berührungsfreie Anordnung des Antriebsscheibensatzes 9 und des Abtriebsscheibensatzes 11 zueinander eine kompakte Bauweise des Getriebeaggregates 1 in radialer Richtung. Die in der Figur 1b dargestellte, schräge Einbaulage des Getriebeaggregates 1 im Fahrzeug läßt sich durch eine versetzte Anordnung der Antriebswelle 2, bezogen auf die Primärwelle 5 bzw. die Sekundärwelle 12, weitgehend frei bestimmen. Die geänderten Achsabstände können in einfacher Weise durch entsprechend angepaßte Radsätze 8 bzw. 18 ausgeglichen werden.

Im folgenden Abschnitt werden die Vorgänge innerhalb des Getriebeaggregates 1 bei Fahrtrichtungsänderung beschrieben. Bei Vorwärtsfahrt wird ein Steg 20 der Planetenräder 15 über eine Reibkupplung 19 mit der sonnenradverbundenen Sekundärwelle 12 drehfest angekuppelt. Die Schaltmittel für die Reibkupplung 19 sind in der Figur 1a zur besseren Übersicht nicht im einzelnen dargestellt. Zweckmäßigerweise befindet sich aber die Reibkupplung 19 bei Vorwärtsfahrt über Federkraft im Eingriff. Zum Wechsel von Vorwärts- in Rückwärtsfahrt wird die Reibkupplung 19 hydraulisch druckbetätigt gegen die Federkraft zunächst aus der erwähnten Eingriffsstellung gelöst, so daß der Steg 20 freikommt. Zum Schalten in den Rückwärtsgang wird die Reibkupplung 19 mit ihrem Steg 20 an dem Gehäuseteil 1b festgebremst. Dadurch läßt sich innerhalb des Planetengetriebes 13 die gewünschte Drehrichtungsumkehr erzielen.

In Figur 2 ist die Anordung des Drehmomentsensors 7 innerhalb der Anfahrkupplung 6 genauer dargestellt. Die Anfahrkupplung 6 besteht aus einem Kupplungsgehäuse 21, das mit dem Rad 4a des Radsatzes 4 antriebsverbunden ist. Das Kupplungsgehäuse 21 ist über ein Nadellager 30 auf der Primärwelle 5 gelagert. Innerhalb des Kupplungsgehäuses 21 befindet sich eine allgemein bekannte Betätigungsvorrichtung, die über eine Membranfeder 22 und Druckplatte 23 das Kupplungsgehäuse 21 mit einer Mitnehmerscheibe 24 reibschlüssig verbindet. Am inneren Nabenumfang der Mitnehmerscheibe 24 ist diese über eine Verzahnung 25 mit einer axial beweglichen Fühlerplatte 26 des Drehmomentsensors 7 verbunden. Die Fühlerplatte 26 besitzt einen Kranz kegelförmiger Bohrungen, in denen Kugeln 27 das Drehmoment über gleiche Bohrungen auf eine zweite Fühlerplatte 28 übertragen. Die Weiterleitung des Antriebsmomentes erfolgt über eine Innenverzahnung 29 von der Fühlerplatte 28 auf die Primärwelle 5. Durch die kegelförmigen Bohrungen mit den Kugeln 27 wird in Abhängigkeit der Höhe des übertragenden Drehmomentes zunächst eine Relativbewegung der beiden Fühlerplatten 26 und 28 in Umfangsrichtung erzeugt. Die damit verbundene Axialbewegung wird auf die Fühlerplatte 26 übertragen mit Veränderung eines Drosselquerschnittes 32. Dieser stellt die Verbindung dar zwischen einem Arbeitsdruck leitenden Kanal 31 und einem druckweiterleitenden Kanal 33, der nicht in der Zeichenebene der Fig. 2 liegt und deshalb lediglich strichliert wiedergegeben ist. Der Kanal 33 führt zum Umschlingungsgetriebe 8 für die druckabhängige Verstellung der beiden Antriebsscheibenhälften 9a und 9b.

## Patentansprüche

1. Getriebeaggregat für Kraftfahrzeuge, mit einem Getriebehäuse (1b) und einer motorseitigen Antriebswelle (2) und einer hierzu gleichachsig angeordneten Abtriebswelle (3), die antriebsverbunden sind über ein Planetengetriebe (13) mit Schaltmittel (19) für Vorwärts- und Rückwärtsfahrt und einem stufenlos verstellbaren Umschlingungsgetriebe (18), dessen Antriebs- (9) und Abtriebsscheibensatz (11) zueinander und zur gemeinsamen Achse der Antriebs- und Abtriebswelle achsparallel angeordnet und antriebsverbunden sind mit einem achsversatzausgleichenden Antriebselement (4), dadurch gekennzeichnet, daß als Schaltmittel für das als einfacher Planetenradsatz ausgebildete Planetengetriebe (13) eine einzige Reibkupplung (19) vorgesehen ist deren Reibelemente über Federkraft zwei Elemente (14,20) des Planetenradsatzes für Vorwärtsfahrt verbinden und über hydraulische Druckbetätigung entgegen der Federkraft ein Element (20) des Planetenradsatzes am Getriebegehäuse (1b) festlegt.

2. Getriebeaggregat nach Anspruch 1, dadurch gekennzeichnet, daß die Reibkupplung (19) bei Vorwärtsfahrt den Steg (20) und das Sonnenrad (14) des Planetengetriebes (13) verbindet, sowie bei Rückwärtsfahrt den Steg (20) an dem Getriebegehäuse (1b) festhält.

3. Getriebeaggregat nach Anspruch 1 oder 2 mit einer Anfahrkupplung und einem Drehmomentsensor zur Steuerung des Umschlingungsgetriebes, dadurch gekennzeichnet, daß der Drehmomentsensor (7) innerhalb der Anfahrkupplung (6) angeordnet ist.

4. Getriebeaggregat nach einem der Ansprüche 1 bis 3, dadurch gekennzeichnet, daß das Planetengetriebe (13) gegenüber dem Umschlingungsgetriebe (8) abtriebsseitig angeordnet ist.

## Claims

1. A gear unit for motor vehicles, comprising a gear case (1b), a drive shaft (2) on the engine side and a driven shaft (3) coaxial with the drive shaft, the shafts being connected for drive purposes via a planet gear (13) comprising gear-shifting means (19) for forward and reverse travel and a steplessly adjustable looped gear (8) comprising a drive wheel set (9) and a driven wheel set (11) which are disposed axially parallel to one another and to the common axis of the drive shaft and the driven shaft and are connected for drive purposes to a drive element (4) for compensating the axial displacement, characterised in that the gear-shifting means for the planetary gear (13), which is a simple planet wheel set, is a single friction clutch (19) comprising elements which, via spring force, connect two elements (14, 20) of the planet wheel set for forward travel and hold an element (20) of the planet wheel set against the gear case (1b) by hydraulic pressure against the force of the spring.

2. A gear unit according to claim 1, chracterised in that during forward travel the friction clutch (19) connects a web (20) to the sun wheel (14) of the planet gear (13), whereas during reverse travel it holds the web (20) against the gear case (1b).

3. A gear unit according to claim 1 or 2, comprising a starting clutch and a torque sensor for controlling the looped gear, characterised in that the torque sensor (7) is disposed inside the starting clutch (6).

4. A gear unit according to any of claims 1 to 3, characterised in that the planet gear (13) is disposed on the driven side relative to the looped gear (8).

## Revendications

1. Transmission pour véhicule automobile, comportant une boîte de vitesses (1b) équipée d'un arbre d'entrée (2), côté moteur et d'un arbre de sortie (3) coaxial au premier, reliés cinématiquement par un mécanisme planétaire (13), d'un organe de commutation (19) déterminant la marche avant ou la marche arrière et d'une transmission à boucle réglable sans gradin (8) dont les disques d'entrée (9) et de sortie (11) sont parallèles à l'axe commun aux arbres d'entrée et de sortie (2, 3) et sont reliées cinématiquement à un entraînement (4) compensant le décalage des axes, caractérisé en ce que, comme moyen de commutation du jeu pour l'engrenage à pignons satellites (13) constitué d'un simple jeu de pignons, il est prévu un seul accouplement à friction (19) dont les organes de friction, en marche avant, relient sous l'action d'une force élastique deux éléments (14, 20) du jeu d'engrenage à pignons satellites tandis qu'en marche arrière un actionneur hydraulique, s'opposant à la force élastique bloque un élément (20) du jeu d'engrenage à pignons satellites sur la boîte de vitesses (1b).

2. Transmission selon la revendication 1, caractérisée en ce l'accouplement à friction (19), en marche avant, relie la traverse (20) et le pignon solaire (14) du jeu d'engrenage à pignons satellites (13), tandis qu'en marche arrière, il rend la traverse solidaire (20) de la boîte de vitesses.

3. Transmission selon la revendication 1 ou 2, équipée d'un coupleur de démarrage et d'un détecteur de couple servant à la commande de la transmission à boucles, caractérisée en ce que le détecteur (7) est monté à l'intérieur du coupleur de démarrage (6).

4. Transmission selon l'une des revendications 1 à 3, caractérisée en ce que le jeu d'engrenage à pignons satellites (13) est monté du côté de l'arbre de sortie vis-à-vis de la transmission en boucles (8).
